# EUROPEAN PATENT APPLICATION

(11) **EP 1 172 189 A2**
(43) Date of publication of application: **16.01.2002**
(21) Application number: 01114899.6
(22) Date of filing: 02.07.2001
(51) Int. Cl.: B26F 3/00

(54) **Apparatus to cut material in plates, in particular glass, ceramics, marble, aluminium, steel, wood and composite material plates**

(30) Priority: 14.07.2000 IT MI001602
(71) Applicant: Luppi, Vilio, 41036 - Medolla (MO) (IT); Vetreria F.lli Paci S.r.l., 20052 Monza (Milano) (IT)
(72) Inventor: Paci, Maurilio, 20038 Seregno (MI) (IT)
(74) Representative: La Ciura, Salvatore

(57) **Abstract**

This invention discloses an apparatus to cut material in plates by means of a high-pressure water jet. The plate is being kept in vertical or almost vertical position leaning on two tables placed endwise and separated by an interspace wide enough to let a cutting tool pass, said tool being fixed to a dragging tape closing said interspace.
The cutting tool is provided with means to direct a high-pressure water jet, which is located on one side of the plate-supporting table, and frictional damper devices which are located on the opposite side. The damper is moving in synchrony with the cutting nozzle and is fixed to said sliding tape along said interspace.

## Description

This invention proposes an apparatus to cut material in plates, such as plates made of glass, ceramics and the like, by means of a jet of pressurised water mixed with abrasive powder, wherein the plates to be cut are laid on an almost vertical support in which the cutting tool consists of a nozzle spraying water and abrasive at a very high pressure and which moves along a stanchion parallel to the plate-supporting table.

On the opposite side there is a damper moving in synchrony with the cutting nozzle.

The table supporting the plate to be cut is composed of a couple of side-by-side panels, spaced enough so as to let the cutting device pass, and it is realised as to create an air cushion on which the plate lies.

The cutting device is linked to a sliding-on-rollers steel tape, which closes the space comprised between the two plate-supporting panels, in such a way as to cut even very thin stripes of material avoiding the risk of them falling beyond the supporting table.

Furthermore, the apparatus presents an innovative system for moving the plates that lie on a couple of chains placed one consecutively to the other and linked by a precision toothed belt provided with an electric friction clutch.

Each chain is linked to its own engine and, according to plate moving direction, one or the other engine is activated so that the movement is supplied by the downstream engine while the upstream engine acts as a brake.

On the support, on which the cutting device is fitted, also a suction cup is applied which sticks to the plate and supports it at an extremity of its to accompany it in its rotating movement when the cut plate is wheeled to turn it from a vertical position to a basically horizontal position, in which it lies on a dragging chain by its longest side.

Apparatuses for cutting material in plates, such as glass, ceramics and the like, by means of a jet of high-pressure water mixed with abrasive powder are known.

In these apparatuses, water mixture comes Out from a nozzle of small dimensions at a very high pressure, 3000 bar and over, thus performing the required cut in the plate.

This cutting technology is already known, so it doesn't require a deeper treatment.

In the known cutting systems, on the side of the plate opposite the one where the nozzle is placed, it is necessary to provide for means fit to damp effectively the high-pressure water jet after that it has cut the material.

To this purpose, in all the known apparatuses the plates to be cut are placed on a horizontal table, under which there is a tank of water about 50-60 cm. deep, which damps the arriving jet.

This solution, as explained above, obliges to lay the plates on a basically horizontal table, causing encumbrance, difficulties in the movement and the necessity of removing the cut plates manually and putting them in a drying oven before packing them, usually in cardboard.

Further inconvenience of the known apparatuses is represented by the fact that the plate supporting table is composed of two supporting panels that are placed side by side, spaced enough so as to let cutting devices pass.

This means that the two supporting panels must be located at a minimum distance of 10-12 cm, this preventing from cutting very thin stripes of material, such as 3/4-cm wide stripes, which otherwise would fall to the ground through this passage.

These other inconveniences are resolved by this invention, which proposes an apparatus to cut materials in plates in which the plates to be cut are laid on an almost vertical support and in which the space between the two adjacent plate-supporting panels is closed by a steel tape set on supporting rollers and to which also the cutting device is applied.

This steel tape closes the space between the panels allowing thus to cut even very thin stripes of materials avoiding the risk of them falling down.

These and other characteristics will result more clearly from the following detailed specification, which is supplied by way of a not limitative example, with reference to the enclosed figures in which:
- figure 1 shows schematically the view of an apparatus according to the invention;
- figure 2 is the view in schematic plan of the apparatus already shown in figure 1;
- figure 3 shows the cutting device in the apparatus according to the invention, in a horizontal section;
- figure 4 is a horizontal section of the apparatus just near the cutting area;
- figure 5 is the section along the line A-A of figure 4;
- figure 6 shows, in section, a detail of the panels constituting the plate-supporting table;
- figure 7 shows, in section, a suction-cup device for plate grabbing aimed at moving the plates.

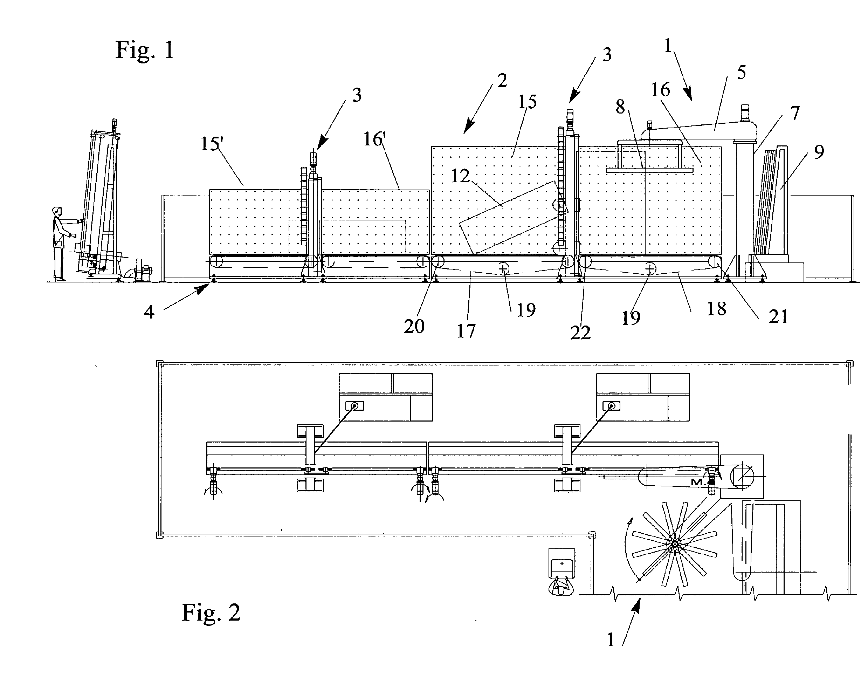

With reference to figure 1 and 2 the apparatus according to the invention, includes a to-be-cut plate feeding system shown as a whole under 1, a plate-supporting table 2, a cutting system 3 and a conveyor device shown under 4.

The grabbing device is made of a rotating arm 5, fitted on a support 7 and provided with grabbing means of known type shown under 8, which are fit to take the plates one by one from a magazine 9 and put them on the conveyor 4, leaning them on the supporting wall 2.

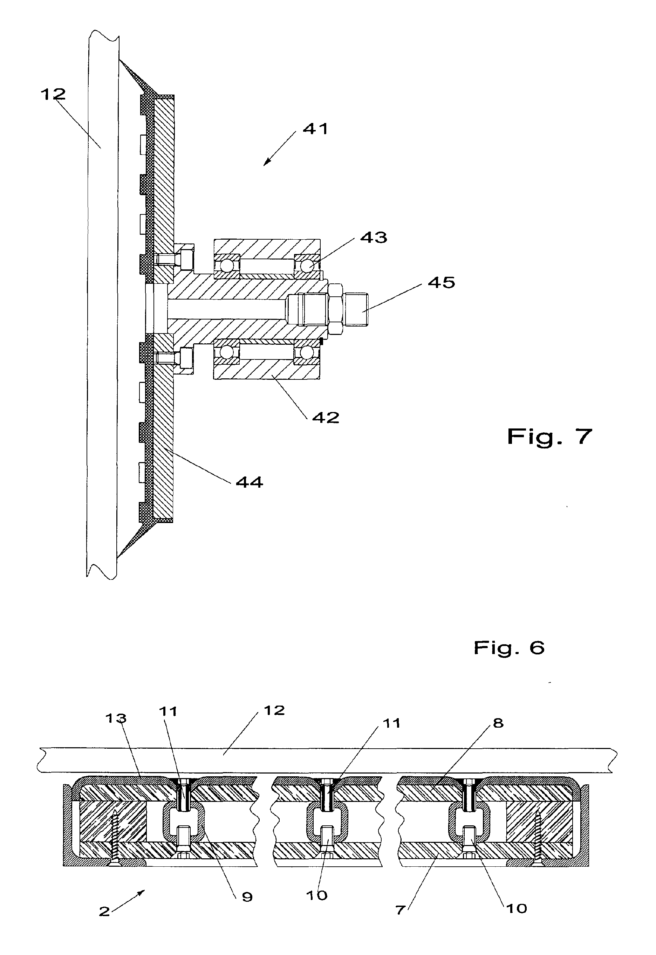

The latter, better shown in the detail of figure 6, is composed of a couple of panels 7 and 8, fixed to a frame, which is made of tubular devices 9, by means of screws 10 and 11.

On the side where the plate to be cut, shown under number 12, is laid, the panel is covered with a felt layer or of other soft material shown under 13.

The tubular devices 9 are linked to means, which are not shown, fit to feed a fluid under pressure, in particular under-pressure air, which comes out from some nozzles made just near the panel the glass plate is laid on.

In particular in the shown pattern the air comes out through passing holes made in screws 11.

This way a kind of air cushion is formed between the glass sheet/plate and the supporting table and enables the plate to slide along the table without any jamming. The table is composed of two panels placed endwise on one side and on the other side of cutting device 3 and spaced enough to let the tool pass.

Two of these panels are shown under number 15 and 16 in figure 1.

The plates are laid on the dragging device, which is made of a number of chains, shown only schematically in the figure, one for each panel, moved by the same number of motors, preferably brushless-type motors.

In the figure version one chain for each panel is provided for.

The chains, which are put just near panels 15 and 16, are shown under numbers 17 and 18 respectively.

The chains are kept tightened by tightening rollers 19 and run by as many engines 20 and 21.

On the opposite side the chains are set on idle rollers 22 linked to one an other by means of a high-precision toothed belt.

Control means of known type are provided for the running of engines 20 and 21, and, in compliance with the invention, the engine of the downstream chain is run to move the plates, according to the direction they are expected to move in, while the upstream engine functions as a brake.

This way the chains are kept constantly tightened and, even when the motion is inverted, there is no slack.

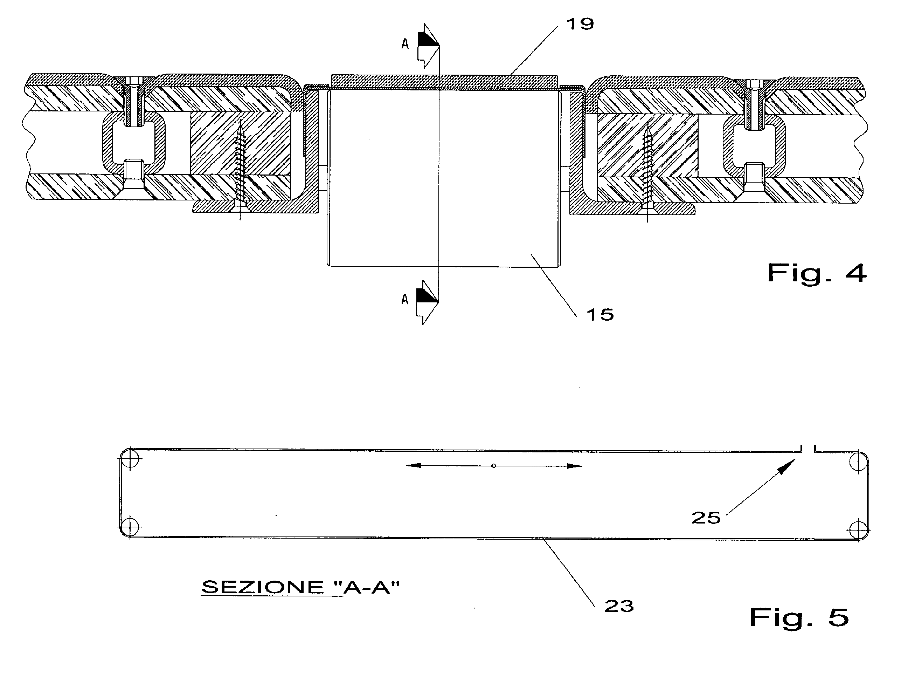

The space between the two panels 15 and 16 is closed by a steel tape, shown under number 23 in figures 4 and 5, which is set on a number of rollers 24 and is externally covered with a felt layer or the like.

The cutting tool, which moves along the whole height of the panels and is shown in the position number 25, is fixed to tape 23.

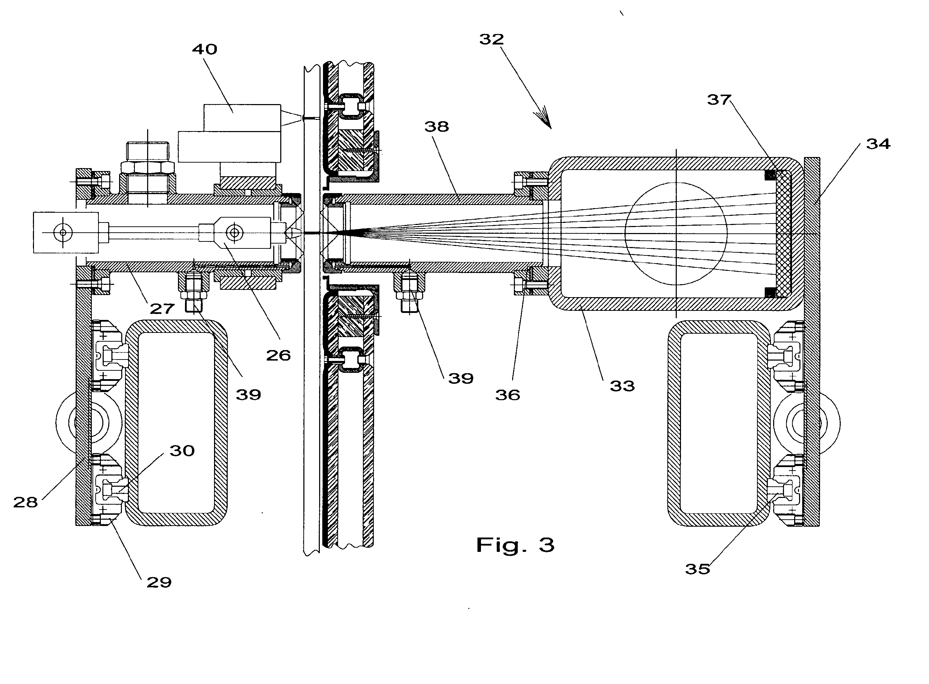

The cutting tool is shown in figure 3 and is composed of a nozzle 26 set inside a box 27, which is integral with a support 28, which by means of guides 29, slides along a couple of sliding shoes 30, which are integral with the apparatus structure.

This allows a precise running of the tool being dragged by tape 23.

Nozzle 26 is linked to known-type devices fit to give out a high-pressure liquid mixed, in case, with abrasive powder.

Besides water jet propulsion, the cutting system may also be laser-type, high-definition-plasma-type or other type suited to this purpose.

Sensory and adjustment means of known type are provided to sense plate thickness and consequently position the nozzle at the proper height.

The interior of the box 27 is linked, through a connection 31, to suction devices fit to clear out any sprays of water or other material should they penetrate inside the box.

In the opposite part there is a damper, shown as a whole under 32, which is made of a chamber 33 set on a trolley 34 which slides along sliding shoes 35 in synchrony with the nozzle and which drags tape 23 in its motion.

On the front side the chamber wall has a hole 36 through which the jet coming from the cutting area penetrates, while on the bottom wall there is a covering 37 made of ceramics or other material fit to resist abrasion caused by water-jet-dragged material.

A pipe 38 connects chamber opening 39 to the nozzle area.

Also pipe 33 is provided with a connection 35 for connecting to suction devices fit to clear out any sprays of water or abrasive material.

Chamber 28 is joined to means, not shown in the figure, fit to produce continuous water flowing on the chamber internal walls, to wash away any material deposits which are collected or cleared out or recycled if it is the case.

A rotating head of known type 40, fit to inject adhesive material, such as silicone or the like, is applied, by the edge of the cut plate, to the support on which the cutting device is set, as well as a suction-cup-type grabbing device, shown in details in figure 7 as a whole under number 41.

This device includes a support 42 on which a suction cup 44 is set by means of bearings 43, this suction cup being joined to suction devices, not shown in the figure, through a central pipe 45.

The functioning is as follows:

The feeding system, by means of arm 5, grabs the plates, one by one, from magazine 9 and puts them from the conveyor belt 18, with the plates leaning on table 2, which is covered by the panel made of felt or of other soft material 13.

To this purpose, arm 1, provided with proper grabbing suction cups, grabs a plate, rotates about 45 degrees to remove it from the magazine for a sufficient distance, after that it wheels the plate 180 degrees to place the suction-cup-free surface towards table 2 and then it continues rotating until it puts the plate on the panel.

The air, which is blown in along stanchions 9 and comes out from the axial holes of screws 11, creates between the supporting table and the plate an air cushion that eliminates friction and lets the plate slide easily on the table.

The plate is made move forward of such a distance as provided for the cutting, after that cutting device 3 is activated.

Steel tape 23 is wheeled until the cutting device is brought near one of the plate edges, after that the means, which pump water-abrasive mixture coming out at a very high pressure (2000-3000 bar) from nozzle 26, are set going.

The water jet cuts the plate, while the tool moves being dragged by tape 23 along guides 30 and 35.

The water jet that crosses the plate penetrates in chamber 38, passes through opening 36 of chamber 33 and exhausts its energy against ceramic covering 37 on the bottom of chamber 33.

At the end of the cutting, the cut plate piece is moved forward and, if necessary, wheeled of 90 degrees to be put on conveyor belt 17 by its longest side.

To this purpose, before or immediately after the cutting, suction-cup device 41 is made stick to the plate to be cut.

Suction cup 44 is laid on the plate and a depression is created inside by intaking air through pipe 45.

The suction cup, set on bearings 34, can rotate freely around its own axis.

The suction cup support is integral with the tool support and this is lowered with a speed which is synchronised to the speed of travel of conveyor belt 17, so as that the suction cup accompanies the cut plate during its rotatory movement, preventing it from falling down while rotating.

While the plate is being lowered, the upstream tape is kept still while the downstream one moves to wheel the plate. To this purpose, during this moving phase, the electric friction clutch on the connection toothed belt is activated.

The plates that lean on conveyor belts 17 and 18 can be moved in one or in the other direction and, according to the motion direction, engines 20 or 21 are respectively activated so that the movement is always conveyed by the downstream engine, so as to keep the chains tightened, while the upstream engines act as a brake, avoiding any slacks when the motion is inverted. Said equipment can be used to carry out horizontal cuttings with the cutting device being kept fixed and the plate being made move forward by chains 17 and 18.

In this case a device 40, which introduces a certain quantity of adhesive, soft material, such as silicone or the like, by the cutting area, is advantageously provided for in order to create, between the two cut and put-one-on-the-other parts of the plate, a sort of cushion to avoid the upper plate to be laid directly against the edge of the lower one with risk of damages. As it turns out to be clear from the supplied description, the equipment to cut material in plates according to the invention appears to be very advantageous, effective and limited in encumbrance.

A skilled in the art may make changes and different versions that must be considered included within the competence of this invention.

## Claims

1. An apparatus to cut material in plates by means of a high-pressure water jet, **characterised in that** it provides for means fit to cut the plate while it is being kept in vertical or almost vertical position.

2. An apparatus to cut material in plates according to claim 1, **characterised in that** it provides for two plate-supporting tables placed endwise and separated by an interspace wide enough to let the cutting tool pass, this tool being fixed to a dragging tape which closes said interspace.

3. An apparatus to cut material in plates according to claim 2, **characterised in that** said cutting tool provides for means fit to direct a high-pressure water jet and located on one side of the plate-supporting table and dampers located on the opposite side, said cutting means and dampers being fixed to said sliding tape along said interspace.

4. An apparatus to cut material in plates according to each of the preceding claims, **characterised in that** it provides means fit to create an air cushion between the plate and the relevant supporting table.

5. An apparatus according to claim 4 in which said supporting table is composed of panels leaning on a structure which includes tubular stanchions, said means fit to create an air cushion consisting of devices fit to blow under-pressure air along said tubular stanchions, said air coming out through holes made in the screws which fix said panels to said stanchions.

6. An apparatus to cut materials in plates according to each of the preceding claims, **characterised in that** it provides, for plate moving, for couples of chains placed ones consecutively to the others, means fit to link said chains to one an other being provided for, each one of said chains being provided with a dragging engine, means being provided for fit to activate the downstream engine to move the plates, so as to keep said chains always tightened.

7. An apparatus according to each of the preceding claims, **characterised in that** it provides for suction-cup means fit to stick to the cut plate and to accompany its movement downwards when the plate is rotated from a vertical to a horizontal position, in which it leans on the dragging chains by its longest side.

8. An apparatus according to claim 7, **characterised in that** said suction-cup means are set on the same support of the cutting device, means being provided for fit to connect -the internal part of said suction cup to suction devices.

9. An apparatus according to each of the preceding claims **characterised in that** it provides for means fit to inject adhesive material by the just-carried-out cut.

10. An apparatus according to each of the preceding claims **characterised in that** said damper consists of a chamber which has, on one side, an opening axially positioned with respect to the water jet coming out from the cutting nozzle, and, on the bottom wall, a ceramic shield fit to absorb the energy of said jet of water and abrasive.

11. An apparatus according to claim 9, **characterised in that** it provides, in said damper, a telescopic pipe to discharge the collected liquid.
